# EUROPÄISCHE PATENTSCHRIFT

(11) **EP 4 192 389 B1**
(45) Veröffentlichungstag und Bekanntmachung des Hinweises auf die Patenterteilung: **04.09.2024**
(21) Anmeldenummer: 21769742.4
(22) Anmeldetag: 31.08.2021
(51) Int. Cl.: A61C 13/20, F27B 17/02, G01K 7/25

(54) **DENTAL-BRENNOFEN SOWIE VERFAHREN ZUM BETREIBEN EINES DENTAL-BRENNOFENS**
DENTAL FURNACE AND METHOD FOR OPERATING A DENTAL FURNACE
FOURNEAU DENTAIRE AINSI QUE PROCÉDÉ DE FONCTIONNEMENT D'UN FOURNEAU DENTAIRE

(30) Priorität: 15.09.2020 EP 20196289
(43) Veröffentlichungstag der Anmeldung: 14.06.2023
(73) Patentinhaber: VITA-ZAHNFABRIK H. Rauter GmbH & Co. KG, 79713 Bad Säckingen (DE)
(72) Erfinder: RAUH, Wolfgang, 79713 Bad Säckingen (DE); ARNOLD, Peter, 79713 Bad Säckingen (DE)
(74) Vertreter: dompatent von Kreisler Selting Werner - Partnerschaft von Patent- und Rechtsanwälten mbB
(86) Internationale Anmeldenummer: PCT/EP2021/074029
(87) Internationale Veröffentlichungsnummer: WO 2022/058161

(56) Entgegenhaltungen:
- EP-A1- 3 760 956
- WO-A1-2017/121616
- DE-A1- 102011 108 991
- DE-B1- 1 498 822

## Beschreibung

Die Erfindung betrifft einen Dental-Brennofen zum Brennen dentalkeramischer Massen sowie zum Aufbrennen dentalkeramischer Masen auf Dental-Legierungen, Zirkonoxid und/oder andere keramische Werkstoffe. Ferner betrifft die Erfindung ein Verfahren zum Betreiben eines derartigen Dental-Brennofens.

Bekannte Dental-Brennöfen weisen eine üblicherweise evakuierbare Brennkammer zur Aufnahme zu brennender Keramikelemente auf. Zum Brennen der Keramikelemente ist in der Brennkammer ferner eine elektrische Heizeinrichtung zum Erwärmen/Brennen des Keramikelements vorgesehen. Als elektrische Heizeinrichtung sind Heizdrähte bekannt. Ferner ist in der Brennkammer bei bekannten Dental-Brennöfen ein Temperatursensor vorgesehen. Zum Brennen eines Keramikelements wird dieses bei offener Brennkammer auf einem Sockel angeordnet. Bevor der Brennofen geschlossen werden kann, muss das Keramikelement vortrocknen, um sicherzustellen, dass beim Brennen ein vollständiges Durchbrennen des Keramikelements erfolgt. Anderenfalls würde beim Brennen des Keramikelements eine äußere Schicht gebrannt und abdichten, wobei der innere Kernbereich des Keramikelements noch feucht ist und nicht vollständig durchgebrannt werden kann. Dies führt zu Rissen und somit zur Zerstörung des Keramikelements.

Nach erfolgtem Vortrocknen wird die Brennkammer geschlossen. Hierbei muss ferner sichergestellt sein, dass die Temperatur in der Brennkammer vor dem Schließen nicht zu hoch ist. Nach dem Schließen erfolgt das Durchführen eines Brennprogramms, in diesem sind insbesondere Heizkurven hinterlegt. Derartige Dental-Brennöfen weisen den Nachteil auf, dass zur Temperaturbestimmung in der Brennkammer teure Temperatursensoren angeordnet sein müssen.

Ein Dental-Brennofen zum Brennen dentalkeramischer Massen mit einer Brennkammer zur Aufnahme zu brennender Keramikelemente und einer elektrischen Heizeinrichtung zum Erwärmen und Brennen des Keramikelements ist in DE 1 498 822 beschrieben.

EP3760956, Stand der Technik nach Artikel 54(3) EPÜ, offenbart einen Dental-Brennofen zum Brennen dentalkeramischer Massen,

Aufgabe der Erfindung ist es einen Dental-Brennofen zum Brennen dentalkeramischer Massen zu schaffen, bei dem ein unmittelbar in der Brennkammer angeordneter Temperatursensor nicht erforderlich ist. Ferner ist es Aufgabe der Erfindung ein Verfahren zum Betreiben eines derartigen Dental-Brennofens zu schaffen.

Die Lösung der Aufgabe erfolgt erfindungsgemäß durch einen Dental-Brennofen mit den Merkmalen des Anspruchs 1, bzw. ein Verfahren zum Betreiben eines Dental-Brennofens mit den Merkmalen des Anspruchs 8.

Der erfindungsgemäße Dental-Brennofen weist eine elektrische Heizeinrichtung zum Erwärmen/Brennen des Keramikelements auf. Erfindungsgemäß ist mit der elektrischen Heizeinrichtung eine Widerstandsmesseinrichtung verbunden. Mit der Widerstands-Messeinrichtung ist erfindungsgemäß eine Auswerteeinrichtung verbunden. Mit dieser ist es möglich, eine in der Brennkammer herrschende Temperatur zu bestimmen und/oder einen Betriebszustand des Dental-Brennofens zu bestimmen. Das Bestimmen der Temperatur kann hierbei beispielsweise aufgrund des gemessenen Widerstands durch einen Vergleich mit hinterlegten Referenzwerten erfolgen. In Abhängigkeit des gemessenen Widerstands kann auch ein durch Vergleichswerte definierter Betriebszustand ermittelt werden. Ein unmittelbar in der Brennkammer angeordneter teurer Temperatursensor ist erfindungsgemäß nicht erforderlich.

Vorzugsweise ist die Widerstandsmesseinrichtung mit der Heizeinrichtung, insbesondere einem Heizdraht der Wärmestrahlung emittiert verbunden. Das Verbinden erfolgt an zwei unterschiedlichen Stellen, um den, je nach Temperatur des Heizdrahts, unterschiedlichen Widerstand bestimmen zu können.

Um eine möglichst genaue Widerstandsmessung und somit eine genaue Bestimmung der tatsächlich in der Brennkammer herrschenden Temperatur vornehmen zu können, ist es bevorzugt, dass die zwei Verbindungsstellen an den beiden Enden des Heizdrahtes, d.h. insbesondere am Anfang und am Ende des Heizdrahtes angeordnet sind. Zwischen den beiden Verbindungsstellen ist somit der für das Beheizen der Brennkammer relevante bzw. aktive Teil des Heizdrahtes, vorzugsweise vollständig, angeordnet. Eine der beiden Verbindungsstellen kann somit im Deckelbereich bzw. im oberen Bereich der Brennkammer und die andere Verbindungsstelle, vorzugsweise an einem unteren Bereich der Brennkammer, ggf. auf Höhe des Sockels, angeordnet sein. Dies ist von der Ausgestaltung und Anordnung des Heizdrahts in der Brennkammer abhängig.

Zusätzlich werden zur weiteren Verbesserung der Qualität der Messung auch an einem mittleren Bereich des Heizdrahtes eine oder mehrere Verbindungsstellen vorgesehen. Sämtliche Verbindungsstellen sind mit der Auswerteeinrichtung verbunden, wobei die Auswerteeinrichtung insbesondere eine Widerstandsänderung detektiert bzw. bestimmt.

Die Widerstandsmessung kann auch bei der Verwendung von Heizstrahlern als elektrische Heizelemente eingesetzt werden, die z.B. unterhalb des Brennkammerdeckels angeordnet sind. Bei der Verwendung von einem oder mehreren Heizstrahlern als Heizeinrichtung ist es bevorzugt, dass als Verbindungsstellen zur Widerstands-Messeinrichtung die beiden elektrischen Verbindungsstellen der Heizeinrichtung verwendet werden. Hierbei handelt es sich insbesondere um die beiden Kontakte des Heizstrahlers, an dem dieser mit der Energiequelle verbunden ist. Insbesondere können auch mehrere Heizstrahler, z.B. in elektrischer Reihenschaltung, zum Einsatz kommen. Die Verbindungsstellen zur Widerstandsmessung werden dann am Anfang des Leiters für den ersten Heizstrahler und am Ende des Leiters des letzten Heizstrahlers sowie ggf. zwischen den mehreren Heizstrahler angeordnet

In besonders bevorzugter Weiterbildung erfolgt eine Kalibrierung der Widerstandsmessung. Dies kann insbesondere dadurch erfolgen, dass der Widerstand des Heizdrahts bei einer bekannten Temperatur gemessen wird. Aufgrund der Widerstandsänderung kann sodann eine Temperaturänderung bestimmt werden. Hierzu ist in besonders bevorzugter Ausführungsform eine Temperaturmesseinrichtung vorgesehen. Diese ist vorzugsweise im Bereich des zu brennenden Keramikelements, insbesondere im Sockel auf dem das Keramikelement angeordnet wird, vorgesehen. Ferner kann der Temperatursensor derart angeordnet werden, dass er nach der Messung der Temperatur und vor dem Durchführen des Brennprozesses entfernt wird, sodass der Temperatursensor durch die hohen in der Brennkammer auftretenden, auch den Sockel erwärmenden Temperaturen nicht beschädigt werden kann. Die Auswerteeinrichtung ist einerseits über die Verbindungsstellen zur Widerstandsmessung mit dem Heizdraht verbunden und in bevorzugter Ausführungsform ferner mit der Temperaturmesseinrichtung. Hierdurch ist es möglich, dass die Auswerteeinrichtung eine Relation zwischen dem gemessenen Widerstand und der gemessenen Temperatur herstellen kann.

In einer Weiterbildung des erfindungsgemäßen Dental-Brennofens kann die Auswerteeinrichtung ferner mit einem Daten-Speicherelement verbunden sein. In diesem können insbesondere zu einer kontinuierlichen Auswertung Messdaten, einschließlich der Messzeitpunkte, gespeichert werden. Hierdurch ist es beispielsweise möglich, Veränderungen des Heizwiderstandes und somit den Verschleiß des Heizwiderstandes zu bestimmen.

Bei dem erfindungsgemäßen Verfahren, das zum Betreiben eines Dental-Brennofens, wie vorstehend beschrieben, geeignet ist, erfolgt ein Messen eines Widerstands der Heizeinrichtung mittels einer Widerstands-Messeinrichtung. Der gemessene Widerstand wird an die Auswerteeinrichtung übermittelt. Ebenso ist es möglich, nur einzelne Werte der Messung an die Auswerteeinrichtung zu übermitteln, die sodann hieraus den gemessenen Widerstand berechnet. Erfindungsgemäß erfolgt auf Basis des gemessenen Widerstands oder anderer Messdaten der Heizeinrichtung ein Bestimmen einer Temperatur und/oder eines Betriebszustandes durch die Auswerteeinrichtung.

Wie vorstehend anhand des erfindungsgemäßen Dental-Brennofens beschrieben ist es bevorzugt, dass die Auswerteeinrichtung kalibriert wird. Die Kalibrierung erfolgt insbesondere, in dem ein gemessener Widerstand zu einer gemessenen Temperatur in Bezug gesetzt wird. Hierbei kann insbesondere vor dem Schlie-βen des Dental-Brennofens eine Temperatur, insbesondere im Bereich des Sockels gemessen werden. Gleichzeitig erfolgt das Messen des Widerstandes, sodass eine einfache Kalibrierung möglich ist.

Vorzugsweise kann mit der Auswerteeinrichtung auf Basis einer gemessenen Widerstandsänderung eine Temperaturänderung bestimmt werden. Dies kann durch hinterlegte Tabellen, Berechnungen und/oder entsprechende Kalibrierung erfolgen.

In einem, ggf. vorgesehenen Daten-Speicherelement, können die gemessenen Widerstandsdaten, insbesondere die gemessenen Zeitpunkte gespeichert werden. Insofern ist es möglich aufgrund dieser Daten eine Auswertung durchzuführen. Beispielsweise kann auf Basis der gespeicherten Daten der Verschleiß des Heizelements bestimmt werden.

Vorzugsweise erfolgt die Widerstandsmessung zumindest zunächst bei offener Brennkammer. Zur weiteren Verbesserung der Kalibrierung ist es bevorzugt, dass eine Widerstandsmessung auch bei geschlossener Brennkammer erfolgt.

In Abhängigkeit der ermittelten Temperaturen können Prozessschritte aktiviert werden. Hierbei kann es sich beispielsweise um ein Öffnen oder Schließen der Brennkammer handeln.

Vorteilhafte Weiterbildung des erfindungsgemäßen Verfahrens sind ferner vorstehend anhand des Dentalen-Brennofens beschrieben.

Nachfolgend wird die Erfindung anhand einer bevorzugten Ausführungsform unter Bezug auf die anliegende Zeichnung näher beschrieben.

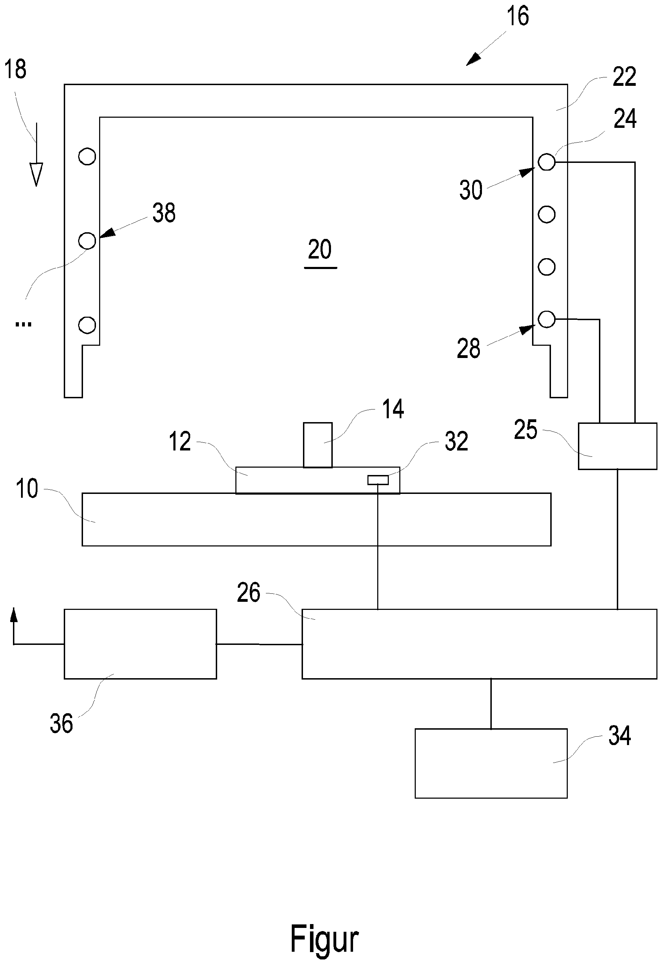

Die Figur zeigt eine stark vereinfachte schematische Schnittansicht des erfindungsgemäßen Dental-Brennofens.

Der Dental-Brennofen weist ein Basiselement 10 auf, auf dem ein Sockel 12 angeordnet ist. Der Sockel 12 dient zur Anordnung eines schematisch dargestellten Keramikelements 14. Ein Gehäuse 16 ist in der Figur in Offenstellung dargestellt und kann zum Schließen in Richtung eines Pfeils 18 verschoben werden, sodass eine Brennkammer 20 ausgebildet ist.

Schematisch dargestellt ist in der, insbesondere zylindrisch ausgebildeten Seitenwand 22, eine als Heizdraht spiralförmig angeordnete Heizeinrichtung 24.

Zur Ermittlung des Widerstands des Heizdrahtes 24 ist eine Auswerteeinrichtung 26 an zwei Verbindungsstellen 28, 30 mit dem Heizdraht verbunden. Die Verbindungsstellen 28, 30 sind an den beiden Enden des Heizdrahtes bzw. der Heizelemente 24 angeordnet, sodass beispielsweise die Verbindungsstelle 28 am Anfang und die Verbindungsstelle 30 am Ende des für das Beheizen der Brennkammer 20 relevanten Teils des Heizdrahtes 24 angeordnet ist.

Mit den Verbindungsstellen 28, 30 ist eine Widerstandsmesseinrichtung 25 verbunden. Die von der Widerstandsmesseinrichtung 25 ermittelten Widerstandsdaten werden an die Auswerteeinrichtung 26 übermittelt. Die Widerstandsmesseinrichtung 25 kann auch in die Auswerteeinrichtung 26 integriert sein.

Des Weiteren kann insbesondere in einem mittleren Bereich des Heizdrahtes 24 eine weitere Verbindungsstelle 38 vorgesehen sein. Diese ist wiederum mit der Widerstandsmesseinrichtung 25 verbunden.

Mit Hilfe der Auswerteeinrichtung 26 kann ein Widerstand des Heizdrahts 24 bzw. eine Widerstandsänderung bestimmt werden.

Zur Kalibrierung und somit zur Bestimmung einer definierten Temperatur ist innerhalb des Sockels 12 ein Temperatursensor 32 angeordnet, der ebenfalls mit der Auswerteeinrichtung 26 verbunden ist.

Die in der Auswerteeinrichtung 26 ermittelten Daten werden an ein Daten-Speicherelement 34 übermittelt. Durch eine entsprechende Auswertung der Daten ist es zum Beispiel möglich den Verschleiß des Heizdrahtes festzustellen. Ferner können die von der Auswerteeinrichtung ermittelten Daten an eine Steuereinrichtung 36 übermittelt werden. Die Steuereinrichtung 36 kann beispielsweise ein Öffnen oder ein Schließen des Gehäuses 16 erfolgen.

## Patentansprüche

1. Dental-Brennofen zum Brennen dentalkeramischer Massen, mit
einer Brennkammer (20) zur Aufnahme zu brennender Keramikelemente (14), und
einer elektrischen Heizeinrichtung (24) zum Erwärmen/Brennen des Keramikelements (14),
**gekennzeichnet, durch**
eine mit der Heizeinrichtung (24) verbundenen Widerstands-Messeinrichtung (25), wobei die Widerstands-Messeinrichtung (25) mit der Heizeinrichtung (24) zumindest an zwei unterschiedlichen Verbindungsstellen der Heizeinrichtung (24) und mindestens einer weiteren Verbindungsstelle (38) in einem Mittelbereich der Heizeinrichtung mit dieser verbunden ist und
einer mit der Widerstands-Messeinrichtung (25) verbundenen Auswerteeinrichtung (26) zum Bestimmen einer Temperatur in der Brennkammer (20) und/oder eines Betriebszustandes des Dental-Brennofens.

2. Dental-Brennofen zum Brennen dentalkeramischer Massen nach Anspruch 1, **dadurch gekennzeichnet, dass** die Heizeinrichtung (24) einen Heizdraht aufweist.

3. Dental-Brennofen zum Brennen dentalkeramischer Massen nach Anspruch 2, **dadurch gekennzeichnet, dass** die Verbindungsstelle (28, 30) an den beiden Enden des Heizdrahts (24) angeordnet sind, wobei vorzugsweise eine der Verbindungsstellen (28) am Anfang und die zweite Verbindungsstelle (39) am Ende des Heizdrahtes vorgesehen ist, besonders bevorzugt eine der Verbindungsstellen (30) im Deckenbereich der Brennkammer vorgesehen ist.

4. Dental-Brennofen zum Brennen dentalkeramischer Massen nach Anspruch 1 bis 3, **dadurch gekennzeichnet, dass** die Heizeinrichtung (24) einen oder mehrere, insbesondere in Reihe geschaltete Heizstrahler aufweist.

5. Dental-Brennofen zum Brennen dentalkeramischer Massen nach einem der Ansprüche 1 bis 4, **dadurch gekennzeichnet, dass** die mindestens eine weitere Verbindungsstelle zwischen den beiden elektrischen Verbindungsstellen der Heizeinrichtung (24), insbesondere zwischen der Verbindungsstelle am Anfang und der Verbindungsstelle am Ende des Heizdrahts (24) vorgesehen ist.

6. Dental-Brennofen zum Brennen dentalkeramischer Massen nach Anspruch 1 bis 5, **dadurch gekennzeichnet, dass** die Auswerteeinrichtung (26) eine Widerstandsänderung bestimmt und/oder dass insbesondere im Bereich des zu brennenden Keramikelements eine Temperaturmesseinrichtung (32) vorgesehen ist.

7. Dental-Brennofen zum Brennen dentalkeramischer Massen nach Anspruch 6, **dadurch gekennzeichnet, dass** die Auswerteeinrichtung (26) mit der Temperaturmesseinrichtung (32) verbunden ist und eine Relation zwischen dem gemessenen Widerstand und der gemessenen Temperatur herstellt.

8. Dental-Brennofen zum Brennen dentalkeramischer Massen nach Anspruch 1 bis 7, **dadurch gekennzeichnet, dass** die Auswerteeinrichtung (26) mit einem Daten-Speicherelement (34) verbunden ist, in dem insbesondere Messdaten speicherbar sind, wobei die Auswerteeinrichtung (26) zur Bestimmung des Verschleißes der Heizeinrichtung (24) Messdaten vergleicht.

9. Verfahren zum Betreiben eines Dental-Brennofens nach einem der Ansprüche 1 bis 8, mit den Schritten
Messen eines Widerstandes der Heizeinrichtung (24) mittels der Widerstands-Messeinrichtung (25),
Übermitteln des gemessenen Widerstands an die Auswerteeinrichtung (26) und
Bestimmen einer Temperatur und/oder eines Betriebszustandes durch die Auswerteeinrichtung, wobei
die Auswerteeinrichtung (26) kalibriert wird, indem ein gemessener Widerstand zu einer gemessenen Temperatur in Bezug gesetzt wird.

10. Verfahren zum Betreiben eines Dental-Brennofens nach Anspruch 9, bei welchem eine Widerstandsänderung gemessen wird und hieraus eine Temperaturänderung bestimmt wird.

11. Verfahren zum Betreiben eines Dental-Brennofens nach Anspruch 9 oder 10, bei welchem die gemessenen Widerstandsdaten, insbesondere zusammen mit Messzeitpunkten in den Daten-Speichenelementen (34) gespeichert werden, wobei vorzugsweise auf Basis der gespeicherten Daten ein Verschleiß des Heizelements (24) bestimmt wird.

12. Verfahren zum Betreiben eines Dental-Brennofens nach einem der Ansprüche 9 bis 11, bei welchem die Widerstandsmessung bei offener Brennkammer (20) erfolgt.

13. Verfahren zum Betreiben eines Dental-Brennofens nach einem der Ansprüche 9 bis 11, bei welchem die Widerstandsmessung und Kennlinienkalibrierung bei geschlossener Brennkammer (20) erfolgt.

14. Verfahren zum Betreiben eines Dental-Brennofens nach einem der Ansprüche 9 bis 13, bei dem abhängig von der ermittelten Temperatur nachfolgende Prozessschritte, z.B. das schrittweise Öffnen und Schlie-βen der Brennkammer (20) gesteuert werden.

## Claims

1. A dental furnace for firing dental ceramic compounds, comprising
a firing chamber (20) for receiving ceramic elements (14) to be fired,
an electric heating device (24) for heating/firing the ceramic element (14),
a resistance measurement device (25) connected to the heating device (24), wherein the resistance measurement device (25) is connected to the heating device (24) at least at two different connection points of the heating device (24) and at least one further connection point (38) in a central portion of the heating device,
an evaluation device (26) for determining a temperature in the firing chamber (20) and/or an operating state of the dental furnace, said evaluation device being connected to the resistance measurement device (25).

2. The dental furnace for firing dental ceramic compounds according to claim 1, **characterized in that** the heating device (24) comprises a heating wire.

3. The dental furnace for firing dental ceramic compounds according to claim 2, **characterized in that** the connection points (28, 30) are arranged at the two ends of the heating wire (24), wherein preferably one of the connection points (28) is arranged at the beginning and the second connection point (39) is arranged at the end of the heating wire, wherein it is particularly preferred that one of the connection points (30) is provided in the ceiling area of the firing chamber.

4. The dental furnace for firing dental ceramic compounds according to one of claims 1 to 3, **characterized in that** the heating device (24) comprises one or a plurality of radiant heaters in particular connected in series.

5. The dental furnace for firing dental ceramic compounds according to one of claims 1 to 4, **characterized in that** the at least one further connection point is provided between the two electrical connection points of the heating device (24), in particular between the connection point at the beginning and the connection point at the end of the heating wire (24).

6. The dental furnace for firing dental ceramic compounds according to one of claims 1 to 5, **characterized in that** the evaluation device (26) determines a resistance change and/or **in that** a temperature measurement device (32) is provided in particular in the area of the ceramic element to be fired.

7. The dental furnace for firing dental ceramic compounds according to claim 6, **characterized in that** the evaluation device (26) is connected to the temperature measurement device (32) and establishes a relationship between the measured resistance and the measured temperature.

8. The dental furnace for firing dental ceramic compounds according to onde of claims 1 to 7, **characterized in that** the evaluation device (26) is connected to a data storage element (34) in which in particular measurement data can be stored, wherein the evaluation device (26) compares measurement data in order to determine the wear of the heating device (24).

9. A method for operating a dental furnace according to claim 1 to 8, comprising the following steps:
measuring a resistance of the heating device (24) using the resistance measurement device (25),
transmitting the measured resistance to the evaluation device (26) and
determining a temperature and/or an operating state by the evaluation device, wherein
the evaluation device (26) is calibrated by establishing a relationship between a measured resistance and a measured temperature.

10. The method for operating a dental furnace according to claim 9, wherein a resistance change is measured and a temperature change is determined therefrom.

11. The method for operating a dental furnace according to claim 9 or 10, wherein the measured resistance data are stored in the data storage elements (34) in particular together with measuring times, wherein a wear of the heating element (24) is determined in particular based on the stored data.

12. The method for operating a dental furnace according to one of claims 9 to 11, wherein the resistance measurement is performed with the firing chamber (20) open.

13. The method for operating a dental furnace according to one of claims 9 to 11, wherein the resistance measurement and the characteristics calibration is performed with the firing chamber (20) closed.

14. The method for operating a dental furnace according to one of claims 9 to 13, wherein subsequent process steps, e.g. the sequential opening and closing of the firing chamber (20), are controlled in dependence on the temperature determined.

## Revendications

1. Fourneau dentaire pour la cuisson de matières céramiques dentaires, comprenant une chambre de cuisson (20) destinée à recevoir des éléments céramiques (14) à cuire et
un dispositif de chauffage électrique (24) pour chauffer/cuire l'élément céramique (14),
**caractérisé par**
un dispositif de mesure de résistance (25) relié au dispositif de chauffage (24), le dispositif de mesure de résistance (25) étant relié au dispositif de chauffage (24) à au moins deux endroits de connexion différents du dispositif de chauffage (24) et à au moins un endroit de connexion (38) supplémentaire dans une zone centrale du dispositif de chauffage, et
un dispositif d'évaluation (26) relié au dispositif de mesure de résistance (25) pour déterminer une température dans la chambre de cuisson (20) et/ou un état de fonctionnement du fourneau dentaire.

2. Fourneau dentaire pour la cuisson de matières céramiques dentaires selon la revendication 1, **caractérisé en ce que** le dispositif de chauffage (24) comprend un fil chauffant.

3. Fourneau dentaire pour la cuisson de matières céramiques dentaires selon la revendication 2, **caractérisé en ce que** les endroits de connexion (28, 30) sont disposés aux deux extrémités du fil chauffant (24), de préférence, un des endroits de connexion (28) étant prévu au début et le deuxième endroit de connexion (30) étant prévu à la fin du fil chauffant, de manière particulièrement préférée, un des endroits de connexion (30) est prévu dans la zone plafond de la chambre de cuisson.

4. Fourneau dentaire pour la cuisson de matières céramiques dentaires selon les revendications 1 à 3, **caractérisé en ce que** le dispositif de chauffage (24) comprend un ou plusieurs dispositifs de chauffage par rayonnement, notamment connectés en série.

5. Fourneau dentaire pour la cuisson de matières céramiques dentaires selon l'une des revendications 1 à 4, **caractérisé en ce que** ledit au moins un endroit de connexion supplémentaire est prévu entre les deux endroits de connexion électrique du dispositif de chauffage (24), notamment entre l'endroit de connexion au début et l'endroit de connexion à la fin du fil chauffant (24).

6. Fourneau dentaire pour la cuisson de matières céramiques dentaires selon les revendications 1 à 5, **caractérisé en ce que** le dispositif d'évaluation (26) détermine un changement de résistance et/ou **en ce que**, notamment, un dispositif de mesure de température (32) est prévu dans la zone de l'élément céramique à cuire.

7. Fourneau dentaire pour la cuisson de matières céramiques dentaires selon la revendication 6, **caractérisé en ce que** le dispositif d'évaluation (26) est relié au dispositif de mesure de température (32) et établit un rapport entre la résistance mesurée et la température mesurée.

8. Fourneau dentaire pour la cuisson de matières céramiques dentaires selon les revendications 1 à 7, **caractérisé en ce que** le dispositif d'évaluation (26) est relié à un élément de stockage de données (34) dans lequel, plus particulièrement, des données de mesure peuvent être stockées, le dispositif d'évaluation (26) comparant des données de mesure pour évaluer l'usure du dispositif de chauffage (24).

9. Procédé de fonctionnement d'un fourneau dentaire selon l'une des revendications 1 à 8, avec les étapes
mesurer une résistance du dispositif de chauffage (24) au moyen du dispositif de mesure de résistance (25),
transmettre la résistance mesurée au dispositif d'évaluation (26) et
déterminer une température et/ou un état de fonctionnement par le dispositif d'évaluation,
le dispositif d'évaluation (26) étant calibré en mettant en rapport une résistance mesurée et une température mesurée.

10. Procédé de fonctionnement d'un fourneau dentaire selon la revendication 9, dans le cadre duquel un changement de résistance est mesuré, à partir duquel un changement de température est déterminé.

11. Procédé de fonctionnement d'un fourneau dentaire selon la revendication 9 ou 10, dans le cadre duquel les données de résistance mesurées, notamment ensemble avec des moments où les mesures sont effectuées, sont stockées dans les éléments de stockage de données (34), avantageusement, une usure de l'élément de chauffage (24) étant déterminé sur la base des données stockées.

12. Procédé de fonctionnement d'un fourneau dentaire selon l'une des revendications 9 à 11, dans le cadre duquel la mesure de résistance est effectuée avec une chambre de cuisson (20) ouverte.

13. Procédé de fonctionnement d'un fourneau dentaire selon l'une des revendications 9 à 11, dans le cadre duquel la mesure de résistance et le calibrage de la courbe caractéristique sont effectués avec une chambre de cuisson (20) fermée.

14. Procédé de fonctionnement d'un fourneau dentaire selon l'une des revendications 9 à 13, dans le cadre duquel des étapes suivantes, comme par exemple l'ouverture et la fermeture par étapes de la chambre de cuisson (20), peuvent être commandées en fonction de la température déterminée.
